Europäisches Patentamt

European Patent Office

Office européen des brevets

(19)

(11) Numéro de publication : **0 052 527 B1**

(12) # FASCICULE DE BREVET EUROPÉEN

(45) Date de publication du fascicule du brevet :
07.05.86

(21) Numéro de dépôt : 81400305.9

(22) Date de dépôt : 27.02.81

(51) Int. Cl.⁴ : **B 60 K 25/02**, B 62 D   5/06, F 02 B 67/06

(54) **Dispositif d'équipement entraîné par le moteur de propulsion d'un véhicule automobile.**

(30) Priorité : 04.11.80 FR 8023507

(43) Date de publication de la demande :
26.05.82 Bulletin 82/21

(45) Mention de la délivrance du brevet :
07.05.86 Bulletin 86/19

(84) Etats contractants désignés :
DE FR GB IT SE

(56) Documents cités :
DE-A- 2 213 303
FR-A- 2 173 596
FR-A- 2 281 245
FR-A- 2 366 950
US-A- 2 988 890

(73) Titulaire : **VALEO**
64, Avenue de la Grande-Armée
F-75017 Paris (FR)

(72) Inventeur : **Jaccod, Michel**
68 rue de la Mézy
F-94500 Champigny-sur-Marne (FR)

(74) Mandataire : **CABINET BONNET-THIRION**
95 Boulevard Beaumarchais
F-75003 Paris (FR)

Jouve, 18, rue St-Denis, 75001 Paris, France

**Description**

La présente invention se rapporte à un dispositif d'équipement entraîné par le moteur de propulsion d'un véhicule automobile, comportant au moins deux équipements accouplés en rotation avec le moteur de propulsion du véhicule par des moyens de transmission.

En général, les axes de rotation du moteur et des équipements sont parallèles et espacés et les moyens de transmission consistent notamment en des poulies et une ou plusieurs courroies passant sur ces poulies.

Les moyens de transmission peuvent être à rapport fixe mais sont avantageusement prévus avec un rapport de transmission variable, de telle sorte que les équipements tournent dans une gamme de vitesses de rotation, qui est la plus favorable à leur rendement, quel que soit le régime moteur.

A cet effet, les moyens de transmission à rapport de transmission variable peuvent être à rapport continûment variable et comportent généralement des poulies qui ont des joues à écartement variable en sens inverse et qui reçoivent une courroie, laquelle est admise à monter radialement sur la poulie dont les joues se rapprochent, en même temps qu'elle est admise à descendre radialement sur l'autre poulie dont les joues s'écartent. L'écartement des joues des poulies est commandé de toute manière appropriée, par exemple en fonction du couple demandé par les équipements qui sont entraînés par lesdits moyens de transmission, ce qui permet aux équipements de travailler dans de bonnes conditions mais nécessite une construction complexe, ou encore en fonction du régime moteur, ce qui permet une construction relativement simple.

En variante, les moyens de transmission variable peuvent être à rapport discontinûment variable, par exemple être à rapport fixe jusqu'à un certain régime moteur, puis changer de rapport à partir de ce régime moteur.

Les équipements accouplés en rotation avec le moteur de propulsion du véhicule par les moyens de transmission peuvent être de diverses natures. Ils comportent, par exemple, une pompe d'assistance. Celle-ci peut notamment servir à l'assistance de la direction et/ou à l'assistance du freinage ou encore faire partie, d'une manière plus complexe, d'une centrale hydraulique qui, non seulement, sert à l'assistance de la direction et/ou du freinage, mais également assure d'autres fonctions, par exemple la suspension du véhicule. Les équipements peuvent comporter également un compresseur volumétrique de suralimentation en air du moteur, un alternateur servant notamment à charger la batterie du véhicule, un compresseur de conditionnement d'air du véhicule, une pompe de circulation du fluide de refroidissement du moteur, etc.

Le document de brevet FR-A-2.366.950 décrit un dispositif de commande d'au moins un accessoire à fonctionnement intermittent entraîné par le moteur thermique d'un véhicule comportant une assistance hydraulique, l'accessoire étant entraîné par l'intermédiaire d'un embrayage électromagnétique, dispositif remarquable en ce que sur le conduit de refoulement de la pompe d'assistance de direction est disposé un mano-contact branché dans le circuit électrique de commande de l'embrayage électromagnétique pour couper la liaison entre le moteur thermique et l'accessoire lorsque la pression de refoulement de la pompe atteint un seuil déterminé.

Cette disposition est prévue pour éviter que, lors de manœuvre de parking où la direction assistée appelle une puissance importante sur le moteur alors que celui-ci tourne à bas régime, la mise en route inopinée d'un accessoire, tel que, typiquement, un compresseur de climatisation, n'entraîne un calage du moteur.

L'objet de FR-A-2.366.950 vise un cas particulier du problème général de limitation de puissance appelée sur une source à puissance limitée.

L'objet de l'invention, qui se place dans le cadre du problème général énoncé ci-dessus, est un dispositif d'équipement entraîné par le moteur de propulsion d'un véhicule du type précisé avant la présentation de FR-A-2.366.950, et comprenant plusieurs équipements entraînés par une même courroie, qui permette non seulement une économie de consommation ou d'énergie, mais également une simplification de la construction, une réduction de l'encombrement et un excellent rendement.

Suivant l'invention, un dispositif d'équipement entraîné par le moteur de propulsion d'un véhicule automobile, comportant au moins deux équipements accouplés en rotation avec le moteur de propulsion du véhicule par des moyens de transmission comportant des poulies respectivement associées audit moteur et auxdits équipements du véhicule, et des moyens de courroie passant sur lesdites poulies, ces équipements comprenant des équipements constitués en groupes hiérarchisés avec un ordre de priorité affecté où l'un au moins des équipements dit supérieur, occupe un rang plus élevé qu'au moins un autre des équipements, dit inférieur, le dispositif comportant en outre au moins un élément économiseur dont l'état varie concomitamment avec les conditions de travail de l'équipement supérieur, cet élément économiseur étant adapté à être rendu actif en mettant au moins en partie hors jeu l'équipement inférieur, en réponse à une variation de l'état dudit économiseur qui correspond au dépassement d'un seuil prédéterminé par les conditions de travail de l'équipement supérieur, se caractérise en ce que les moyens de transmission des équipements dudit groupe hiérarchisé comprennent au moins une courroie commune pour l'entraînement par ledit moteur desdits équipements du groupe hiérarchisé, de telle sorte qu'au moins ladite courroie soit soumise à des conditions de travail qui, au plus correspondent à une valeur inférieure à la somme des puissances de consommation maximale desdits équipements.

Grâce à cette disposition on supprime les pointes de consommation d'énergie, tout en réservant une priorité absolue à l'équipement supérieur. La consommation d'énergie est dans l'ensemble, réduite et plus uniforme. La courroie commune n'a pas besoin d'être dimensionnée pour véhiculer la somme des puissances absorbée par les équipements hiérarchisés, ce qui a pour conséquence que l'on peut, soit augmenter le nombre d'équipements entraînés par une seule courroie jusqu'à, au mieux, n'utiliser qu'une courroie pour entraîner tous les équipements, soit utiliser une courroie, commune à plusieurs équipements, de section réduite.

La présente invention s'applique avec un intérêt tout particulier à un dispositif d'équipement entraîné par le moteur de propulsion d'un véhicule automobile lorsque les moyens de transmission, qui accouplent en rotation les équipements avec le moteur de propulsion du véhicule, sont à rapport de transmission variable et comportent notamment des poulies ayant des joues à écartement variable.

Dans ce cas, grâce aux conditions de travail adoucies auxquelles sont soumis de tels moyens de transmission à rapport de transmission variable, on peut réaliser ces moyens de transmission avec une construction particulièrement simple, en faisant varier le rapport de transmission en fonction du régime moteur.

Ainsi, même si le rapport de transmission n'est pas directement indexé sur le couple, demandé par les équipements entraînés par lesdits moyens de transmission, les divers équipements bénéficient d'excellentes conditions de travail, avec un rendement élevé, tandis que les moyens de transmission peuvent avoir une construction simplifiée, un encombrement réduit, un rendement amélioré, et une durée de service plus longue, grâce à une réduction de la puissance maximale à transmettre et une réduction de la plage de puissance à transmettre. Ces avantages peuvent, s'il y a lieu, être mis à profit, en augmentant le nombre des unités d'équipement à entraîner, pour une capacité donnée de la transmission à rapport variable.

Suivant une autre caractéristique, les moyens de transmission à rapport de transmission variable comportent une poulie motrice associée au moteur, une poulie réceptrice associée à l'un des équipements du véhicule, l'une au moins de ces poulies, et de préférence les deux, ayant des joues à écartement variable, une courroie à rapport de transmission variable passant sur ces poulies, d'autres poulies associées aux autres équipements du véhicule, et des moyens de courroie à rapport de transmission fixe passant sur une poulie solidaire de ladite poulie réceptrice et sur lesdites autres poulies.

Les moyens de courroie à rapport de transmission fixe peuvent comporter une courroie propre à chaque équipement, ou de préférence, une courroie commune à au moins deux équipements, ou même, plus avantageusement encore, une courroie commune à tous les équipements.

Une telle simplification est permise grâce à l'adoucissement des conditions de travail des moyens de transmission.

L'équipement supérieur peut consister en une pompe d'assistance ou un compresseur volumétrique de suralimentation en air du moteur, ou un alternateur.

L'équipement inférieur peut être formé par le compresseur volumétrique de suralimentation en air du moteur, par l'alternateur ou encore le compresseur de conditionnement d'air du véhicule.

Le groupe hiérarchisé d'équipement peut comporter soit deux équipements, soit trois équipements, soit quatre équipements ou encore davantage. Il est à noter que, lorsque le groupe hiérarchisé comporte plus de deux équipements, un équipement peut être supérieur par rapport à un autre équipement, tout en étant inférieur par rapport à un autre équipement encore.

L'élément économiseur peut avoir toute forme appropriée suivant l'équipement avec lequel il coopère.

Lorsque l'élément économiseur coopère avec la pompe d'assistance, il peut notamment comporter un mano-contact. Lorsque la pompe d'assistance est une pompe de direction assistée, l'élément économiseur peut également comporter des moyens de rupteur sensibles à la condition de braquage d'une crémaillère de la direction assistée, ou encore des moyens de rupteur sensibles au couple développé sur une barre de torsion de la direction assistée.

Lorsque l'équipement supérieur est un compresseur volumétrique de suralimentation en air du moteur, l'élément économiseur peut notamment être rendu actif en fonction de la position d'enfoncement d'une pédale d'accélérateur dudit moteur.

Lorsque l'équipement supérieur est un alternateur, l'élément économiseur est notamment rendu actif en fonction de la tension de la batterie associée à l'alternateur.

Il est à noter que, parmi les équipements du véhicule, il peut s'en trouver qui ne soient pas directement accouplés en rotation par les moyens de transmission avec le moteur de propulsion du véhicule mais qui peuvent être indexés sur de tels équipements.

Par exemple, lorsqu'un ventilateur évaporateur de conditionnement d'air du véhicule est prévu, il est avantageusement adapté à être mis en jeu ou hors jeu en même temps que l'alternateur est mis lui-même en jeu ou hors jeu. Lorsqu'un ventilateur de condenseur de conditionnement d'air du véhicule est prévu, il est avantageusement adapté à être mis en jeu ou hors jeu en même temps que le compresseur de conditionnement d'air est mis lui-même en jeu ou hors jeu.

Lorsque des équipements électriques de confort, par exemple allume-cigare, lunette dégi- vrante, lève-glace, chauffage, etc. sont prévus, ils sont avantageusement adaptés à être mis en jeu ou hors jeu, partiellement ou totalement, concomitamment avec l'alternateur.

Bien entendu, les moyens de transmission qui entraînent les équipements qui font partie du groupe hiérarchisé peuvent, en même temps, entraîner des équipements qui ne font pas partie de ce groupe, par exemple une pompe de circulation du fluide de refroidissement du moteur, telle que pompe à eau et également tous autres équipements appropriés, par exemple un ventilateur de refroidissement du moteur, ayant un accouplement mécanique ou visqueux avec la pompe à eau.

Des formes d'exécution de l'invention sont ci-après décrites, à titre d'exemple, en référence aux dessins annexés dans lesquels :

la figure 1 est un schéma d'un dispositif d'équipement suivant l'invention, dans lequel le moteur de propulsion du véhicule entraîne une pompe de direction assistée et un alternateur, qui constituent le groupe hiérarchisé, et également une pompe à eau qui ne fait pas partie de ce groupe hiérarchisé, les moyens de transmission étant à rapport fixe ;

la figure 2 concerne une autre variante dans laquelle les moyens d'entraînement sont à rapport de transmission variable et comportent deux poulies à joues à écartement variable et une courroie ;

la figure 3 est une vue, à plus grande échelle, de ces poulies à joues à écartement variable et de cette courroie ;

la figure 4 est une vue analogue à la figure 2 mais concerne une autre variante ;

les figures 5 et 6 concernent respectivement deux variantes de la disposition de l'élément économiseur adapté à mettre hors jeu l'alternateur lorsque les conditions de travail de la pompe de direction assistée dépassent un seuil prédéterminé ;

la figure 7 est un schéma analogue à celui de la figure 1 mais dans lequel le moteur de propulsion du véhicule entraîne non seulement la pompe de direction assistée, l'alternateur et la pompe à eau, mais également un compresseur de suralimentation en air du moteur et un compresseur de conditionnement d'air du véhicule ;

les figures 8 et 9 sont respectivement des vues de détail de deux parties de la figure 7 ;

la figure 10 est une vue d'une partie modifiée du schéma de la figure 7, dans laquelle l'alternateur est adapté à être mis en partie hors jeu, à savoir seulement si l'intensité débitée par cet alternateur est supérieure à une valeur prédéterminée ;

les figures 11, 12, 13, 14 et 15 concernent respectivement cinq variantes des moyens de transmission du schéma de la figure 7.

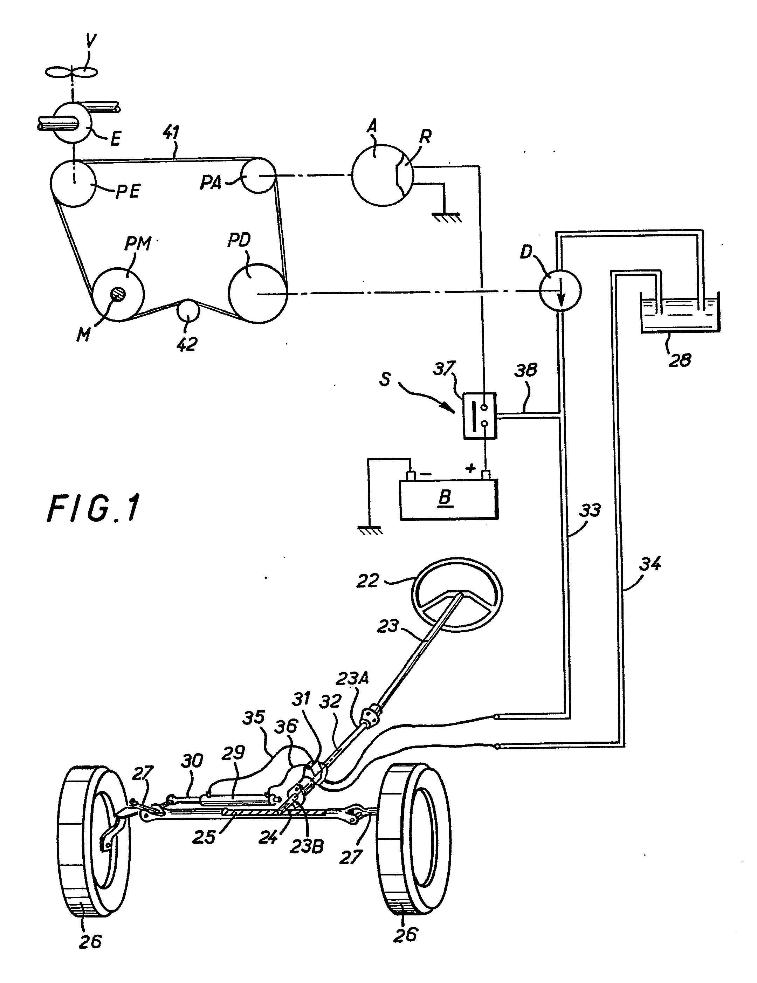

On se référera d'abord à la figure 1 qui concerne, à titre d'exemple non limitatif, une application de l'invention à un dispositif d'équipement entraîné par le moteur de propulsion d'un véhicule automobile dont on voit le vilebrequin en M. Ce dispositif comporte une pompe de direction assistée D, un alternateur A, dont on voit le régulateur en R, et une pompe E de circulation du fluide de refroidissement dudit moteur, telle qu'une pompe à eau E associée à un ventilateur V de refroidissement d'un circuit d'eau du moteur. Le ventilateur V peut notamment être à accouplement mécanique ou à accouplement visqueux.

La pompe de direction assistée D peut soit servir uniquement à l'assistance de la direction, soit faire partie, d'une manière plus complexe, d'une centrale hydraulique qui non seulement sert à l'assistance de la direction mais également assure d'autres fonctions, par exemple l'assistance du freinage et/ou la suspension du véhicule.

La pompe de direction assistée D, l'alternateur A, et la pompe à eau E avec éventuellement le ventilateur V, sont respectivement solidaires en rotation de trois poulies PD, PA et PE. Une autre poulie PM est solidaire en rotation du vilebrequin M du moteur de propulsion du véhicule. Les axes du vilebrequin M et les poulies PD, PA, PE sont parallèles et espacés. La poulie PM solidaire en rotation du vilebrequin M entraîne en rotation les poulies PD, PA et PE par l'intermédiaire d'une courroie trapézoïdale unique 41, ainsi que sur un galet de tension 42. On appréciera que cette disposition à courroie unique réduit l'encombrement, notamment axial.

La direction comporte un volant 22 et une colonne de direction 23. Celle-ci est composée de deux parties alignées 23A et 23B prévues avec un jeu angulaire relatif limité permettant un décalage angulaire entre les parties 23A et 23B sous l'action du volant 22. La partie 23A est solidaire du volant 22, tandis que la partie 23B est solidaire d'un pignon 24 qui engrène avec une crémaillère 25. Celle-ci commande l'orientation des roues directrices 26 du véhicule par l'intermédiaire de biellettes de braquage 27.

Une centrale hydraulique d'assistance D-28 comporte un réservoir 28 et la pompe D qui puise dans ce réservoir. Un actuateur hydraulique consiste en un vérin 29 ayant un piston dont la tige 30 agit sur la crémaillère 25.

Un distributeur hydraulique 31 est interposé entre la centrale 28-D et le vérin 29 et est sensible au décalage angulaire des deux parties 23A et 23B, pour faire agir le vérin 29 sur les biellettes de braquage 27, dans le même sens que le volant 22.

Le jeu angulaire entre les parties 23A et 23B de la colonne de direction 23 est de quelques degrés de part et d'autre d'une position moyenne de repos, qui tend à être rappelée et maintenue par une barre de torsion 32 accouplant élastiquement les parties 23A et 23B.

On voit en 33 le conduit de pression qui alimente le distributeur 31 à partir de la pompe D et en 34 le conduit de retour du distributeur 31 vers le réservoir 28. On voit également en 35 et 36 les conduits de service qui relient le distributeur 31 aux deux côtés du vérin 29.

Les équipements D, A et E sont ainsi accouplés en rotation avec le moteur de propulsion du véhicule par les moyens de transmission PM, PD, PA, PE et 41. Les équipements D, A et E comportent des équipements D et A qui constituent un groupe hiérarchisé de deux équipements avec un ordre de priorité où l'équipement D, appelé équipement supérieur primaire occupe un rang plus élevé que l'équipement A, appelé équipement inférieur secondaire.

Un élément économiseur S est prévu. L'état de cet élément économiseur S varie concomitamment avec les conditions de travail de l'équipement supérieur primaire D.

L'élément économiseur S est adapté à être rendu actif en mettant au moins en partie hors jeu l'équipement inférieur secondaire A, en réponse à une variation de l'état de l'élément économiseur S qui correspond à un dépassement d'un seuil prédéterminé par les conditions de travail de l'équipement supérieur primaire D, de telle sorte que les moyens de transmission PM, PD, PA, PE et 41 soient, dans l'ensemble, soumis à un travail qui, au plus, correspond à une valeur inférieure à la somme des puissances de consommation maximales des équipements.

L'élément économiseur S est prévu directement sensible aux conditions de travail de la pompe de direction assistée D, de manière à mettre hors jeu l'alternateur A lorsque les conditions de travail de la pompe de direction assistée D dépassent ledit seuil prédéterminé.

L'élément économiseur S est adapté à couper l'alimentation électrique du régulateur R de l'alternateur A. L'élément S consiste par exemple en un mano-contact 37 branché par un conduit 38 sur le conduit de refoulement 33 de la pompe de direction assistée D. Ce mano-contact 37 est interposé entre la batterie B du véhicule et le régulateur R de l'alternateur A.

Le mano-contact 37 est taré de manière à permettre l'alimentation du régulateur R par la batterie B, tant que la pression dans le conduit 33 est inférieure à un seuil de pression prédéterminé, par exemple 15 bars, et à couper l'alimentation du régulateur R lorsque la pression dans le conduit 33 dépasse ce seuil prédéterminé.

En fonctionnement, tant que la pression dans le conduit 33 est inférieure au seuil prédéterminé, ce qui correspond notamment à des conditions de braquage autres que des conditions de manœuvre en parking, la pompe de direction assistée D, l'alternateur A et la pompe E consomment tous de l'énergie qui leur est transmise par le vilebrequin M, par les moyens de transmission PM, PD, PA, PE et 41 mais cette consommation est dans l'ensemble modérée et uniforme du fait que la pompe de direction assistée n'est soumise qu'à des conditions de travail modérées.

Par contre, lors d'un fort braquage, notamment à faible vitesse, par exemple au cours d'une manœuvre en parking généralement de courte durée, la pression dans le conduit 33 dépasse le seuil prédéterminé et ceci a pour effet de mettre hors jeu l'alternateur A. La pompe de direction assistée D consomme davantage d'énergie mais l'alternateur A est admis à cette occasion à ne plus dépenser d'énergie. Il en résulte, dans l'ensemble, une consommation d'énergie qui reste modérée et uniforme. Les moyens de transmission PM, PD, PA, PE et 41 sont soumis à un travail qui, au plus, correspond à une valeur inférieure à la somme des puissances de consommation maximales des équipements D, A et E.

La disposition suivant l'invention a donc pour effet, d'une part de réduire la consommation d'énergie instantanée en la répartissant dans le temps et d'autre part, d'éviter de surdimensionner les moyens de transmission PM, PD, PA, PE et 41. En particulier, les moyens de courroie trapézoïdale 41 ne sont jamais soumis à des efforts excessifs.

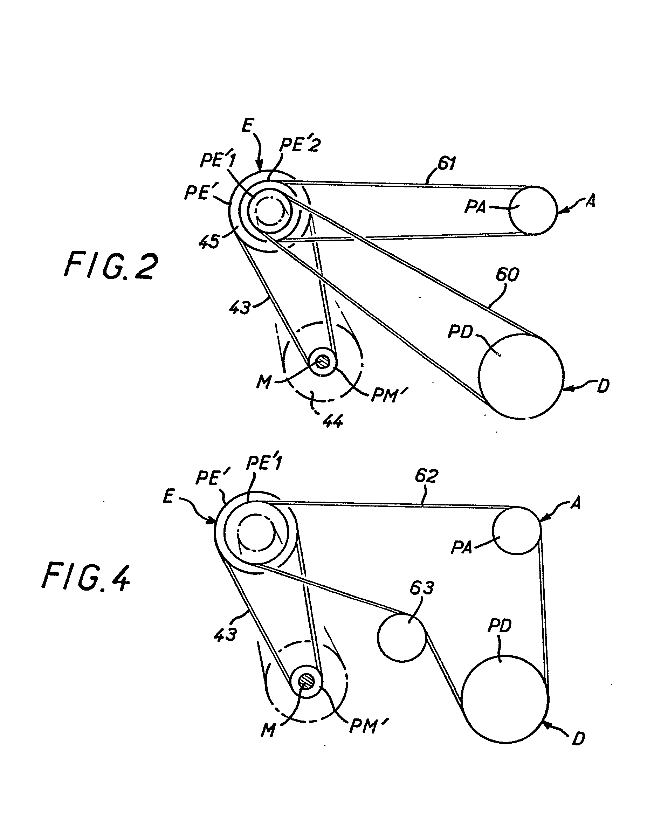

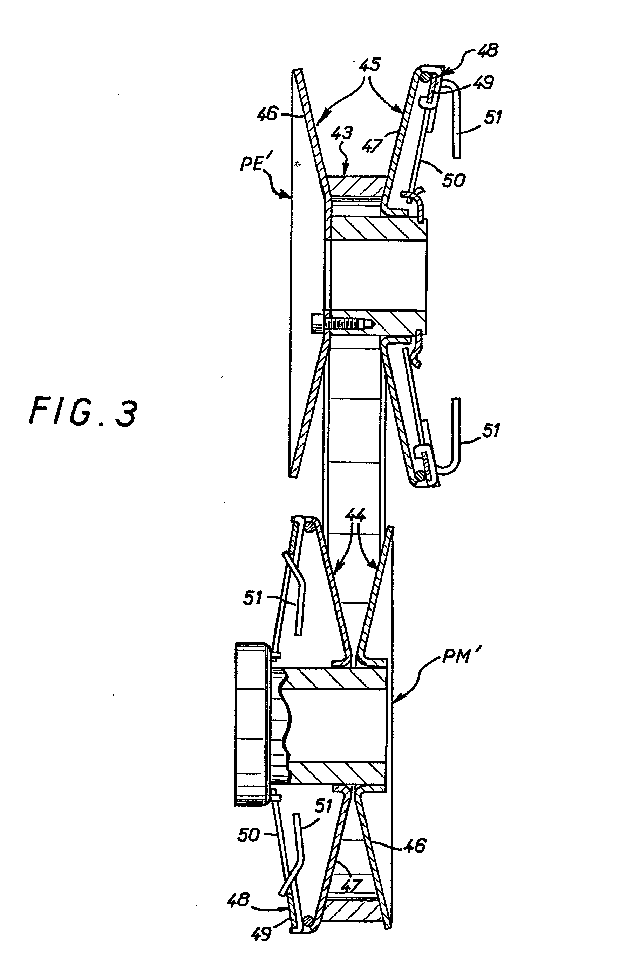

Dans une variante (figures 2 et 3), la poulie motrice PM' du vilebrequin M entraîne la poulie réceptrice PE' de la pompe à eau E par une courroie trapézoïdale 43 ayant un rapport de transmission variable. Dans ce cas, l'une au moins des poulies PM' et PE', et de préférence les deux poulies PM' et PE', ont des joues coniques à écartement variable.

Plus particulièrement, les joues coniques 44 de la poulie PM' sont rapprochables et écartables axialement l'une par rapport à l'autre et il en est de même des joues coniques 45 de la poulie PE', par le jeu du rapprochement et de l'écartement des joues coniques 44 et 45 des poulies PM' et PE', la courroie trapézoïdale 43 monte ou descend le long du rayon des poulies, ce qui fait varier le rapport de transmission. On voit à la figure 2 en trait plein la position qui correspond au rapport le plus démultiplié et en trait mixte la position qui correspond au rapport le plus multiplié.

Pour fixer les idées, le variateur PM'-43-PE' est avantageusement commandé en fonction du régime moteur de façon à introduire un rapport de multiplication de l'ordre de 1,3 lorsque le régime moteur est compris entre 600 et 1 200 t/min à introduire un rapport progressivement décroissant lorsque le régime moteur varie de 1 200 à 2 500 t/min et à introduire un rapport de démultiplication de l'ordre de 0,6 lorsque le régime moteur est supérieur à 2 500 t/min.

On voit plus particulièrement à la figure 3 un mode de construction des poulies PM' et PE' à joues à écartement variable 44 et 45. Les joues 44 de la poulie PM' comportent une joue axialement fixe 46 et une joue axialement mobile 47. La joue axialement mobile 47 est soumise à l'action d'un ressort 48 qui tend à la rapprocher axialement de la joue axialement fixe 46. Le ressort 48 est constitué par un diaphragme conique ayant une partie périphérique continue 49 formant rondelle Belleville et prolongée vers le centre par des doigts radiaux espacés 50. Le diaphragme 48 est adapté à rendre solidaire en rotation les deux joues 46 et 47. En outre, la joue axialement mobile 47 est soumise à l'action de masselottes 51 qui sont assujetties au diaphragme 48 et qui tendent à soulager d'autant plus l'action axiale élastique exercée par le diaphragme 48 sur la joue 47 et donc sur la courroie 43, que la vitesse de rotation de la poulie PM' est élevée.

La construction de la poulie PE' est analogue à celle qui vient d'être décrite pour la poulie PM' et on reconnaît en 46 celle des deux joues 45 axialement fixe et en 47 celle qui est axialement mobile, en 48 le diaphragme et en 51 les masselottes. Mais le diaphragme 48 de la poulie PE' qui tend à rapprocher les deux joues 45 l'une de l'autre a son action axiale élastique qui est renforcée par les masselottes 51 d'autant plus que la vitesse de rotation de la poulie PE' est élevée.

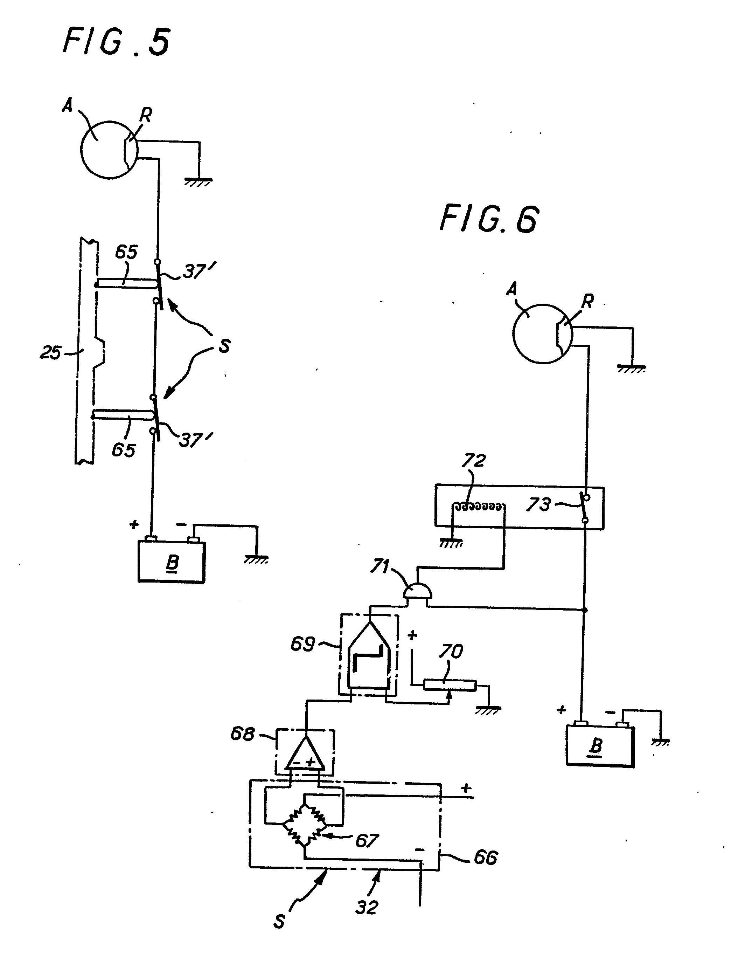

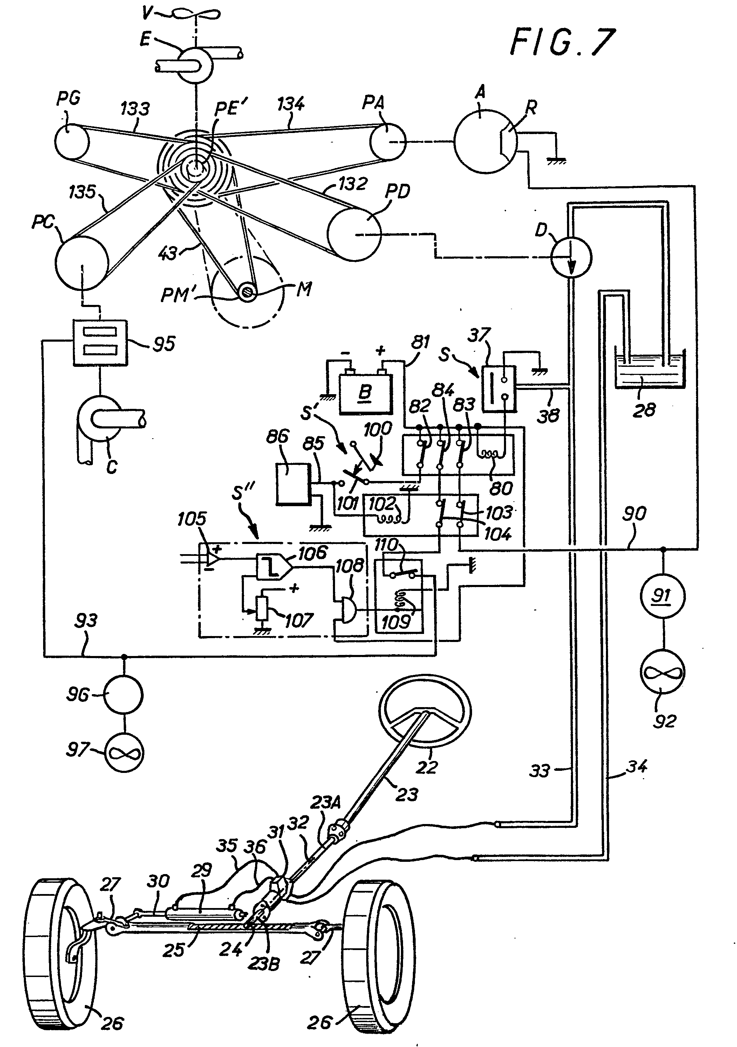

Dans ces conditions, lorsque la poulie PM' tourne avec un régime moteur peu élevé, la courroie 43 occupe la position représentée à la figure 4, c'est-à-dire avec un grand rayon sur la poulie PM' et un petit rayon sur la poulie PE'. Il y a multiplication. Lorsque la poulie motrice PM' tourne avec un régime moteur élevé, la courroie 43 descend radialement sur la poulie PM' et monte radialement sur la poulie PE'. Il y a démultiplication. On appréciera la construction particulièrement simple et peu encombrante de ces poulies PM' et PE' à rapport de transmission variable en fonction du régime moteur.

La poulie PD de la pompe de direction assistée D est entraînée par une courroie 60 à partir d'une poulie PE'1 solidaire en rotation de la poulie PE' de la pompe à eau E, tandis que la poulie PA de l'alternateur A est entraînée par une courroie 61 à partir d'une poulie PE'2 solidaire en rotation des poulies PE' et PE'1. Dans l'exemple de la figure 2, les poulies PE'1 et PE'2 sont représentées avec des diamètres différents mais peuvent avoir le même diamètre, et, par exemple, être formées par une poulie à deux gorges.

Dans un tel dispositif à transmission variable, les conditions de fonctionnement sont, comme précédemment, améliorées, le dimensionnement réduit et le rendement plus élevé, grâce à la mise hors jeu de l'alternateur A au moment des forts braquages où la consommation de la pompe de direction assistée D accuse une pointe de consommation.

On notera également que les efforts axiaux sur la courroie sont réduits et que la durée de service de celle-ci est ainsi prolongée.

L'agencement de la figure 2 peut d'ailleurs être avantageusement simplifié ainsi qu'il est représenté à la figure 4 à laquelle on se référera maintenant. Le vilebrequin M entraîne toujours la poulie PE' de la pompe à eau E par la courroie trapézoïdale 43 à rapport de transmission variable, mais la poulie PE'2 est supprimée et la poulie PD de la pompe de direction assistée D et la poulie PA de l'alternateur A sont toutes les deux entraînées par une courroie trapézoïdale unique 62 à partir de la poulie PE'1 solidaire en rotation de la poulie PE'. La courroie 62 passe non seulement sur les poulies PD, PA et PE'1 mais également sur un galet de tension 63.

Pour fixer les idées, l'agencement selon l'invention représenté à la figure 4 permet d'améliorer le rendement du variateur PM'-43-PE', en abaissant d'environ 50 % la valeur critique du couple transmissible par ce variateur par rapport à un équipement usuel à trois unités A, D et E.

On peut également, grâce à l'invention, pour une capacité donnée de la transmission variable, prévoir l'entraînement d'un ou plusieurs équipements supplémentaires.

Dans l'exemple de la figure 1, l'élément économiseur S qui met hors jeu l'alternateur A lors des forts braquages, consiste dans le mano-contact 37 qui est asservi à la pression dans le conduit 33 de refoulement de la pompe de direction assistée D.

En variante, (figure 5) l'élément économiseur S comporte des moyens de minirupteurs 37' qui sont sensibles à la position de braquage de la crémaillère 25 de la direction assistée.

A cet effet, les minirupteurs 37' sont associés à des poussoirs 65 qui sont actionnés lorsque la crémaillère 25 dépasse une position prédéterminée, dans un sens ou dans l'autre correspondant aux forts braquages et équivalant par exemple à la pression sus-visée de 15 bars dans le conduit de refoulement 33.

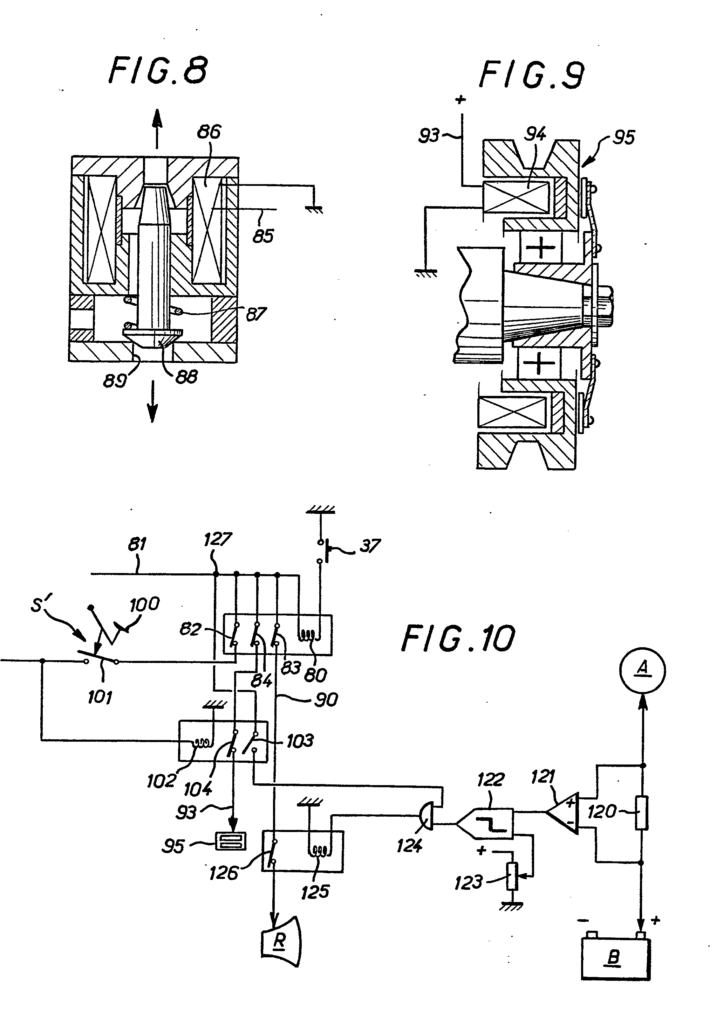

Dans une autre variante (figure 6) l'élément économiseur S comporte un capteur de couple 66 à pont de jauges 67 et est adapté sur la colonne de direction 23, par exemple sur la barre de torsion 32. Le capteur 66 est alimenté par la batterie B. Lors de l'utilisation du véhicule, la colonne de direction 23 subit un effort de torsion qui se matérialise au capteur 66 par une déformation des résistances du pont de jauges 67. A cette déformation, correspond une variation de la tension en sortie du pont 67. La tension est conditionnée par un amplificateur 68 et comparée en 69 à une tension de référence 70, de préférence réglable. Lorsque la tension en provenance du pont de jauges 67 est supérieure à la tension de référence en 70, une impulsion est générée, ce qui permet en sortie d'une porte « ET » 71, l'excitation d'un relais 72 qui coupe en 73 l'alimentation du régulateur R de l'alternateur A. L'autre entrée de la porte 71 est alimentée par la batterie B.

L'alternateur A est donc mis, là également, hors jeu lorsque le couple sur la barre de torsion 32 dépasse une valeur qui correspond par exemple sensiblement à la pression de 15 bars dans le conduit 33 de refoulement de la pompe D.

On se référera maintenant à la figure 7 où la disposition est analogue à celle qui a été décrite en référence à la figure 1 mais où les équipements comportent, non seulement, la pompe de direction assistée D, l'alternateur A et la pompe à eau E, mais également un compresseur de conditionnement d'air C et un compresseur volumétrique G de suralimentation en air du moteur.

Le compresseur volumétrique G permet d'envoyer un débit d'air pulsé au moteur, ce qui a pour effet de suralimenter le moteur en air et d'augmenter ses performances.

Le compresseur C fait partie d'une installation de conditionnement d'air du véhicule qui comporte également un ventilateur d'évaporateur 92 et un ventilateur de condenseur 97. Le compresseur C fournit l'énergie à une source de froid pour générer les frigories. Le ventilateur d'évaporateur 92 souffle de l'air refroidi à l'intérieur de l'habitacle du véhicule.

On reconnaît en PD, PA et PE les poulies qui sont associées à la pompe de direction assistée D, à l'alternateur A et à la pompe à eau E : une poulie PG est associée au compresseur volumétrique de suralimentation en air du moteur ; le compresseur de conditionnement d'air C est associé à une poulie PC.

Les moyens de transmission sont à rapport variable et comportent, comme à la figure 2, une poulie motrice PM' et une poulie réceptrice PE', dont l'une au moins, et de préférence les deux, sont à joues à écartement variable, avec la courroie 43 à rapport de transmission variable. La poulie PE' entraîne la pompe à eau E et, en outre, au moyen de courroies individuelles 132, 133, 134 et 135, propres aux divers équipements, respectivement, entraîne la pompe de direction assistée D, le compresseur volumétrique G de suralimentation en air du moteur, l'alternateur A et le compresseur C de conditionnement d'air.

Les divers équipements C, G, A, D sont répartis de part et d'autre du plan passant par les axes des poulies PM' et PE'.

A la figure 7, les équipements qui constituent le groupe hiérarchisé suivant l'invention comportent quatre équipements où un premier de ces équipements, dit équipement primaire, formé ici par la pompe D de direction assistée occupe un rang plus élevé qu'un deuxième de ces équipements, dit équipement secondaire formé par le compresseur volumétrique G de suralimentation en air du moteur, lequel occupe un rang plus élevé qu'un troisième de ces équipements, dit équipement tertiaire, formé par l'alternateur A, lequel, à son tour, occupe un rang plus élevé qu'un quatrième de ces équipements, dit équipement quaternaire, formé par le compresseur C de conditionnement d'air.

L'élément économiseur S a, comme à la figure 1, son état qui varie concomitamment avec les conditions de travail de l'équipement primaire formé par la pompe de direction assistée D. Mais, à la figure 7, l'élément économiseur S est adapté à être rendu actif lors des forts braquages, notamment à faible vitesse, par exemple au cours d'une manœuvre en parking, pour mettre hors jeu simultanément l'équipement secondaire formé par le compresseur volumétrique G de suralimentation en air du moteur, l'équipement tertiaire formé par l'alternateur A, et l'équipement quaternaire formé par le compresseur C de conditionnement d'air du véhicule.

L'élément économiseur S consiste par exemple, comme à la figure 1, dans le mano-contact 37 asservi à la pression dans le conduit de refoulement 33 de la pompe D de direction assistée.

Le mano-contact 37 agit sur une bobine de relais 80 qui est alimentée par le circuit 81 de la batterie B et qui commande trois interrupteurs 82, 83 et 84.

L'interrupteur 82 est interposé entre le circuit 81 de la batterie B et un conducteur 85 qui alimente une bobine 86 (figures 7 et 8). Celle-ci est adaptée à commander, contre l'action d'un ressort 87, une valve 88 de fermeture d'un passage d'air 89 (figure 8) pour l'air débité par le compresseur volumétrique G de suralimentation en air vers le moteur.

L'interrupteur 83 est interposé entre le circuit 81 de la batterie B et un conducteur 90 qui alimente le régulateur R de l'alternateur A. Sur le conducteur 90 est branché un moteur électrique 91 d'entraînement du ventilateur 92, d'évaporateur de conditionnement d'air du véhicule.

L'interrupteur 84 est interposé entre le circuit 81 de la batterie B et un conducteur 93 qui alimente la bobine 94 d'un embrayage électromagnétique 95 (figures 7 et 9) qui est interposé entre le compresseur C de conditionnement d'air du véhicule et la poulie PC.

Il est à noter qu'un embrayage électromagnétique, tel que l'embrayage 95 (figure 9) peut être utilisé pour mettre hors jeu le compresseur volumétrique G par absence d'entraînement en rotation, ceci au lieu de l'électro-valve 86 qui agit par fermeture de l'alimentation en air (figure 7).

De même, une électrovalve, telle que l'électrovalve 86 peut être prévue à la place de l'embrayage électromagnétique 95 pour shunter l'évaporateur et le condenseur de l'installation de conditionnement d'air, ce qui a pour effet d'annuler les pertes de charge auxquelles le compresseur C est exposé et de réduire ainsi l'énergie dont a besoin le compresseur C.

Sur le conducteur 93 est branché un moteur électrique 96 d'entraînement du ventilateur 97 du condenseur de conditionnement d'air du véhicule.

Tant que la pression dans le conduit 33 de refoulement de la pompe D de direction assistée, ne dépasse pas le seuil prédéterminé, le mano-contact 37 détermine la fermeture des interrupteurs 82, 83 et 84. L'élément économiseur S ne s'oppose pas à ce que les autres équipements G, A et C assurent leur service de même que les ventilateurs 92 et 97, si rien d'autre ne s'y oppose.

A l'occasion d'un fort braquage, la pression dans le conduit 33 dépasse le seuil prédéterminé et le mano-contact 37 provoque l'ouverture des interrupteurs 82, 83 et 84. Tous les équipements G, A et C sont mis hors jeu, de même que les ventilateurs 92 et 97.

Un autre élément économiseur S' est prévu et a son état qui varie concomitamment avec les conditions de travail de l'équipement secondaire formé par le compresseur volumétrique G de suralimentation en air du moteur. L'élément économiseur S' est rendu actif lorsque la pédale d'accélérateur 100 du moteur dépasse un degré d'enfoncement prédéterminé, ce qui correspond à une forte suralimentation en air du moteur.

L'élément S' peut être directement asservi à la pédale 100 ou au papillon d'ouverture des gaz, ou à une timonerie entre cette pédale et ce papillon, ou encore à tout autre facteur équivalent, par exemple le degré de vide à l'aval du papillon.

L'élément économiseur S' consiste par exem-

ple en un interrupteur 101 qui est commandé par la pédale 100 et qui est interposé entre l'interrupteur 82 et le conducteur 85 d'alimentation de l'électrovalve 86. Sur le conducteur 85 est branché, à l'aval de l'interrupteur 101, un relais 102 qui commande deux interrupteurs 103 et 104.

L'interrupteur 103 est connecté au conducteur 90 d'alimentation du régulateur R de l'alternateur A et du moteur 91 du ventilateur 92 de l'évaporateur de conditionnement en air du véhicule.

L'interrupteur 104 est connecté indirectement au conducteur 93 d'alimentation de l'embrayage électromagnétique du compresseur C de conditionnement en air du véhicule, par l'intermédiaire d'un interrupteur 110.

Lorsque la pompe D ne dépasse pas son seuil de travail prédéterminé, tant que la pédale d'accélérateur 100 ne dépasse pas son degré d'enfoncement prédéterminé, les interrupteurs 103 et 104 sont fermés. L'élément économiseur S' ne s'oppose pas à ce que les autres équipements A et C assurent leur service, de même que les ventilateurs 92 et 97, si rien d'autre ne s'y oppose.

Si la pédale d'accélérateur 100 dépasse son degré d'enfoncement prédéterminé, ce qui correspond à une forte suralimentation en air du moteur, les interrupteurs 103 et 104 s'ouvrent. Les équipements A et C sont mis hors jeu, de même que les ventilateurs 92 et 97.

Encore un autre élément économiseur S" est prévu et a son état qui varie concomitamment avec les conditions de travail de l'alternateur A. L'élément économiseur S" est rendu actif lorsque la batterie B n'est pas suffisamment chargée par l'alternateur A et a sa tension qui descend en dessous d'une valeur prédéterminée.

La tension de la batterie B est conditionnée par un amplificateur 105 puis comparée en 106 à une tension de référence 107, de préférence réglable. Lorsque la tension délivrée par la batterie est inférieure à la tension de référence en 107, une impulsion est générée, ce qui permet en sortie d'une porte « ET » 108 d'exciter un relais 109. Celui-ci commande l'interrupteur 110 connecté au conducteur 93 d'alimentation de l'embrayage électromagnétique 95 du compresseur C de conditionnement d'air du véhicule. L'autre entrée de la porte 108 est reliée au conducteur 81.

Lorsque les équipements D et G n'ont pas de fortes conditions de travail, tant que la tension de la batterie B est suffisamment élevée, ce qui suppose des conditions de travail relativement faibles de l'alternateur A, l'interrupteur 110 est fermé. L'élément économiseur S" ne s'oppose pas à ce que l'équipement C assure son service, de même que le ventilateur 97.

Si la tension de la batterie B descend en dessous de sa valeur prédéterminée, ce qui suppose de fortes conditions de travail pour l'alternateur A, l'interrupteur 110 s'ouvre. L'équipement C est mis hors jeu, de même que le ventilateur 97.

Autrement dit, le dispositif suivant le schéma de la figure 7 fonctionne comme suit.

Lorsque la pression de la pompe de direction assistée D dépasse la valeur prédéterminée, les équipements, compresseur volumétrique G de suralimentation en air du moteur, l'alternateur A, et l'ensemble C de conditionnement d'air, n'assurent plus leurs fonctions.

On notera que, lors d'une forte utilisation de la pompe de direction assistée D, la suralimentation en air du moteur ne peut être réalisée, ce qui est favorable à la sécurité.

Lorsque la pression de la pompe de direction assistée D est inférieure à la valeur prédéterminée, l'équipement compresseur volumétrique G de suralimentation en air du moteur devient prioritaire sur les autres équipements, c'est-à-dire l'alternateur A et l'ensemble de conditionnement d'air C.

Si les deux équipements, pompe de direction assistée D et compresseur volumétrique G de suralimentation en air du moteur, ne dépassent pas les valeurs prédéterminées, l'alternateur A et l'ensemble C de conditionnement d'air peuvent travailler normalement, mais si la tension de la batterie B descend en dessous d'un seuil prédéterminé, il y a arrêt de l'ensemble de conditionnement d'air C.

En variante (figure 10), la disposition est analogue à celle qui vient d'être décrite en référence aux figures 7 à 9, mais, lorsque la pompe D ne dépasse pas son seuil de travail prédéterminé et que le compresseur volumétrique G devient l'équipement supérieur vis-à-vis de l'alternateur A. Cet alternateur A est adapté à être mis hors jeu par l'élément économiseur S', seulement si l'intensité débitée par l'alternateur A est supérieure à une valeur prédéterminée.

A cet effet, un shunt 120 est monté entre la batterie B et l'alternateur A, et la tension correspondante est conditionnée par un amplificateur 121 puis comparée en 122 à une tension de référence 123 de préférence réglable. Lorsque la tension est supérieure à la tension de référence, une impulsion est générée, ce qui permet en sortie d'une porte « ET » 124, l'excitation d'un relais 125 qui commande un interrupteur 126 interposé dans le conducteur 90 d'alimentation du régulateur R de l'alternateur A. L'autre entrée de la porte 124 est reliée en 127 au conducteur 81 par l'intermédiaire de l'interrupteur 103.

Si l'intensité du courant débité par l'alternateur A est supérieure à une valeur prédéterminée, le fonctionnement est analogue à celui qui a été décrit en référence aux figures 7 à 9, mais si l'intensité du courant débité par l'alternateur A est inférieure à cette valeur prédéterminée, le régulateur R de l'alternateur reste alimenté, ce qui permet à l'alternateur de recharger la batterie en toutes circonstances.

A la figure 10, c'est donc au moins en partie, que l'alternateur A est adapté à être mis hors jeu.

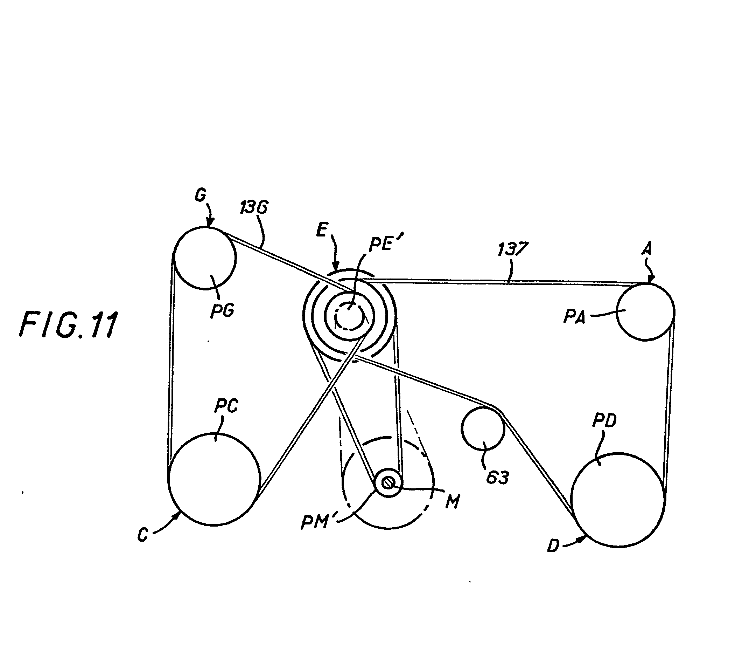

A la figure 11, la disposition est analogue à celle qui est représentée à la figure 7, mais la poulie PE' de la pompe à eau E entraîne les équipements G et C par une courroie commune 136 et les équipements D et A par une courroie commune 137, suivant une disposition analogue à celle de la figure 5 et comportant un galet de tension 63.

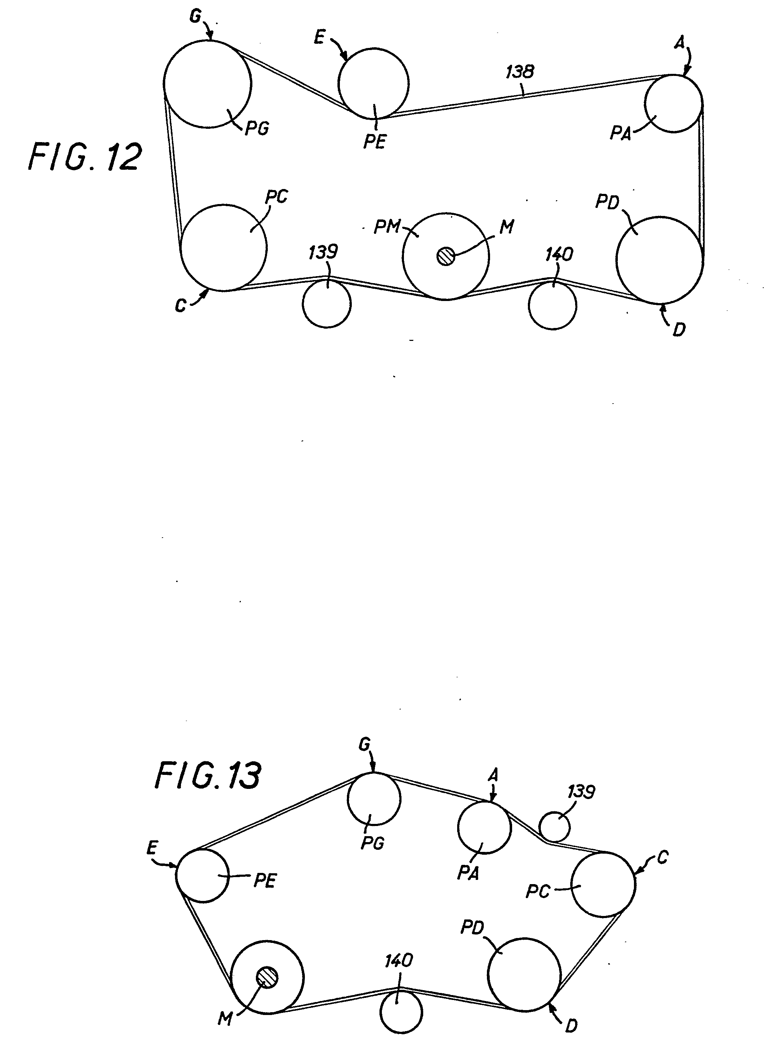

Dans une autre variante (figure 12), c'est une courroie unique 138 qui entraîne, à partir du moteur M, tous les équipements qui font partie du groupe hiérarchisé, c'est-à-dire les équipements D, G, A, C et également la pompe à eau E. On voit en 139 et 140 des galets de tension.

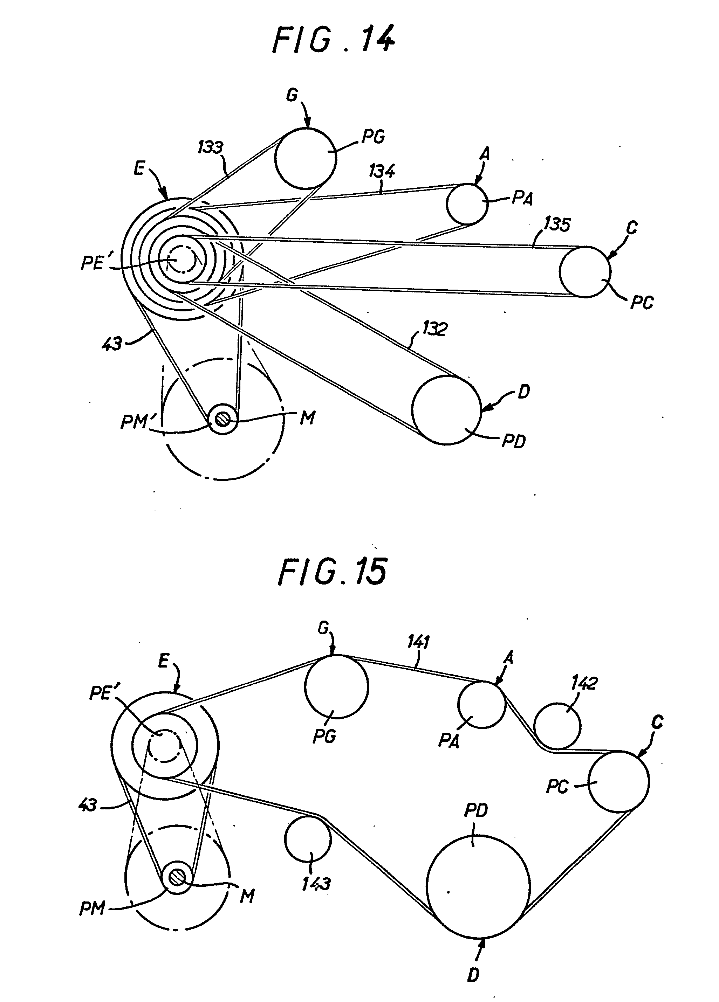

Dans la variante représentée à la figure 13, la disposition est analogue à celle qui est représentée à la figure 12, mais les équipements sont disposés d'une manière différente. A la figure 12, les équipements sont disposés autour du moteur M dans l'ordre suivant C, G, E, A, D. A la figure 13, cet ordre est différent et est : E, G, A, C, D.

Dans la variante représentée à la figure 14, la disposition est analogue à celle qui est représentée à la figure 7, et comporte des moyens de transmission à rapport variable avec les poulies PM' et PE' à joues à écartement variable et avec des courroies individuelles pour l'entraînement des divers équipements à partir de la pompe à eau E. Mais les équipements sont disposés autour de la pompe à eau E dans un ordre différent.

A la figure 7, les équipements sont disposés autour de la pompe à eau E dans l'ordre suivant : C, G, A, D. A la figure 14, cet ordre est : G, A, C, D. En outre, à la figure 14, tous les équipements G, A, C, D sont disposés d'un même côté du plan passant par les axes des poulies PM' et PE'.

Dans la variante représentée à la figure 15, la pompe à eau E est entraînée à partir du moteur avec un rapport de transmission variable grâce aux poulies PM' et PE' dont les joues sont à écartement variable et avec la courroie 43 à rapport de transmission variable. Tous les équipements G, A, C, D sont entraînés par une courroie unique 141 à partir de la poulie PE' de la pompe à eau E. On voit en 142 et 143 des galets de tension. Les équipements sont disposés autour de la pompe à eau E dans l'ordre suivant : G, A, C et D.

**Revendications**

1. Dispositif d'équipement entraîné par le moteur de propulsion d'un véhicule automobile, comportant au moins deux équipements (D, G, A, C, E) accouplés en rotation avec le moteur de propulsion du véhicule par des moyens de transmission comportant des poulies (PM, PE, PD, PG, PA, PC...) respectivement associées audit moteur et auxdits équipements (E, D, G, A, C) du véhicule et des moyens de courroie passant sur lesdites poulies, ces équipements comprenant des équipements constiués en groupe hiérarchisé avec un ordre de priorité affecté où l'un au moins des équipements dit supérieur, occupe un rang plus élevé qu'au moins un autre des équipements, dit inférieur, le dispositif comportant en outre au moins un élément économiseur (S, S', S'') dont l'état varie concomitamment avec les conditions de travail de l'équipement supérieur, cet élément économiseur étant adapté à être rendu actif en mettant au moins en partie hors jeu l'équipement inférieur, en réponse à une variation de l'état dudit économiseur qui correspond à un dépassement d'un seuil prédéterminé par les conditions de travail de l'équipement supérieur, caractérisé en ce que les moyens de transmission des équipements dudit groupe hiérarchisé comprennent au moins une courroie commune (41, 43, 62, 138, 141) pour l'entraînement par ledit moteur desdits équipements du groupe hiérarchisé, de telle sorte qu'au moins ladite courroie commune soit soumise à des conditions de travail qui, au plus, correspondent à une valeur inférieure à la somme des puissances de consommation maximale desdits équipements.

2. Dispositif selon la revendication 1, caractérisé en ce que ladite courroie commune (41, 62, 138, 141) passe sur l'ensemble des poulies desdits équipements (E, D, G, A, C) du groupe hiérarchisé.

3. Dispositif selon l'une des revendications 1 et 2, caractérisé en ce que ladite courroie commune (43) fait partie d'un variateur à rapport de transmission variable en fonction du régime moteur.

4. Dispositif selon la revendication 3, caractérisé en ce que ledit variateur comprend une poulie motrice (PM') associée au moteur, une poulie (PE') associée à l'un des équipements (E) du véhicule, l'une au moins de ces poulies ayant des joues (44, 45) à écartement variable, la courroie commune passant sur ces poulies, d'autres poulies (PD, PA...) associées aux autres équipements du groupe hiérarchisé et des moyens de courroie (60, 61, 62, 132, 133, 134, 135, 136, 137) à rapport de transmission fixe passant sur au moins une poulie solidaire de ladite poulie réceptrice, et sur lesdites autres poulies.

5. Dispositif selon la revendication 4, caractérisé en ce que lesdits moyens de courroie à rapport de transmission fixe comportent pour tous les équipements qui font partie dudit groupe hiérarchisé, une courroie commune à tous ces équipements (figures 2, 15, 17, 19).

6. Dispositif selon l'une quelconque des revendications 1 à 5, caractérisé en ce que ledit équipement supérieur est une pompe d'assistance (D).

7. Dispositif selon la revendication 6, caractérisé en ce que ladite pompe d'assistance est une pompe de direction assistée (D).

8. Dispositif selon la revendication 6 ou la revendication 7, caractérisé en ce que ledit élément économiseur (S) comporte un manocontact (37) branché sur le refoulement (33) de la pompe d'assistance (D).

9. Dispositif selon la revendication 7, caractérisé en ce que ledit élément économiseur (S) comporte des moyens de rupteur (37') sensibles à la position de braquage d'une crémaillère (25) de la direction assistée (figure 6).

10. Dispositif selon la revendication 7, caractérisé en ce que ledit élément économiseur comporte des moyens de rupteur sensibles (73) au couple développé sur une barre de torsion (32) de la direction assistée (figure 7).

11. Dispositif selon l'une quelconque des revendications 1 à 5, caractérisé en ce que ledit équipement supérieur est un compresseur volumétrique (G) de suralimentation en air du moteur.

12. Dispositif selon la revendication 11, caractérisé en ce que ledit élément économiseur (S') est rendu actif en fonction de la position d'enfoncement d'une pédale d'accélérateur (100) du moteur.

13. Dispositif selon l'une quelconque des revendications 1 à 5, caractérisé en ce que ledit équipement supérieur est un alternateur (A).

14. Dispositif selon la revendication 13, caractérisé en ce que ledit élément économiseur (S") est rendu actif en fonction de la tension d'une batterie (B) associée à l'alternateur (A).

15. Dispositif selon l'une quelconque des revendications 1 à 12, caractérisé en ce que ledit équipement inférieur est un alternateur (A).

16. Dispositif selon la revendication 15, dans lequel l'alternateur (A) a un régulateur (R), caractérisé en ce que ledit élément économiseur (S) est adapté lorsqu'il est rendu actif, à couper l'alimentation électrique du régulateur (R) de l'alternateur (A).

17. Dispositif selon la revendication 15 ou la revendication 16, caractérisé en ce que l'alternateur (A) est adapté à être mis hors jeu par l'élément économiseur (S) seulement si l'intensité débitée par l'alternateur (A) est supérieure à une valeur prédéterminée (figure 11).

18. Dispositif selon l'une quelconque des revendications 13 à 17, comportant un ventilateur (92) d'évaporateur de conditionnement d'air, caractérisé en ce que ce ventilateur (92) est adapté à être mis en jeu ou hors jeu en même temps que l'alternateur (A) est mis lui-même en jeu ou hors jeu.

19. Dispositif selon l'une quelconque des revendications 1 à 10, caractérisé en ce que ledit équipement inférieur est un compresseur volumétrique (G) de suralimentation en air du moteur.

20. Dispositif selon la revendication 19, caractérisé en ce que ledit élément économiseur (S') est adapté à mettre hors jeu ledit compresseur volumétrique (G) de suralimentation en air du moteur, en fermant un passage (89) de l'air débité par ledit compresseur vers le moteur (figure 9).

21. Dispositif selon la revendication 19, caractérisé en ce que l'élément économiseur (S') est adapté à mettre hors jeu ledit compresseur volumétrique (G) de suralimentation en air du moteur, en débrayant le mouvement de rotation transmis par le moteur audit compresseur (G).

22. Dispositif selon l'une quelconque des revendications 1 à 12, caractérisé en ce que ledit équipement inférieur est un compresseur (C) de conditionnement d'air du véhicule.

23. Dispositif selon la revendication 22, caractérisé en ce que ledit élément économiseur (S") est adapté à mettre hors jeu ledit compresseur (C) de conditionnement d'air du véhicule en débrayant (95) le mouvement de rotation transmis par le moteur audit compresseur (figure 10).

24. Dispositif selon la revendication 22 ou la revendication 23, comportant un ventilateur (97) de condenseur de conditionnement d'air, caractérisé en ce que ce ventilateur (97) est adapté à être mis en jeu ou hors jeu en même temps que ledit compresseur (C) de conditionnement d'air du véhicule est mis lui-même en jeu ou hors jeu.

25. Dispositif selon l'une quelconque des revendications 1 à 24, caractérisé en ce que les équipements qui constituent ledit groupe hiérarchisé comportent trois équipements où un premier de ces équipements (D, G), dit équipement primaire, occupe un rang plus élevé qu'un deuxième de ces équipements, dit équipement secondaire (G, A), lequel occupe un rang plus élevé qu'un troisième de ces équipements, dit équipement tertiaire (A, C).

26. Dispositif selon l'une quelconque des revendications 1 à 24, caractérisé en ce que les équipements qui constituent ledit groupe hiérarchisé comportent quatre équipements, où un premier de ces équipements (D), dit équipement primaire, occupe un rang plus élevé qu'un deuxième de ces équipements (G), dit équipement secondaire, lequel occupe un rang plus élevé qu'un troisième de ces équipements (A), dit équipement tertiaire, lequel à son tour occupe un rang plus élevé qu'un quatrième de ces équipements (C), dit équipement quaternaire.

27. Dispositif selon l'une quelconque des revendications 24 à 26, caractérisé en ce que l'équipement primaire est une pompe d'assistance (D).

28. Dispositif selon la revendication 24 ou la revendication 25, caractérisé en ce que l'équipement primaire est un compresseur (G) volumétrique de suralimentation en air du moteur.

29. Dispositif selon l'une quelconque des revendications 25 à 28, caractérisé en ce que l'équipement secondaire est un alternateur (A).

30. Dispositif selon l'une quelconque des revendications 25 à 27, caractérisé en ce que l'équipement secondaire est un compresseur volumétrique (G) de suralimentation en air du moteur.

31. Dispositif selon l'une quelconque des revendications 25 à 27, caractérisé en ce que l'équipement secondaire est un compresseur (C) de conditionnement d'air du véhicule.

32. Dispositif selon l'une quelconque des revendications 25 à 27 et 30, caractérisé en ce que l'équipement tertiaire est un alternateur (A).

33. Dispositif selon l'une quelconque des revendications 25 à 30, caractérisé en ce que l'équipement tertiaire est un compresseur (C) de conditionnement d'air du véhicule.

34. Dispositif selon l'une quelconque des revendications 26 à 30 et 32, caractérisé en ce que l'équipement quaternaire est un compresseur (C) de conditionnement d'air du véhicule.

**Claims**

1. Equipment driven by the motor powering a motor vehicle, comprising at least two devices (D, G, A, C, E) coupled in rotation with the motor powering the vehicle via transmission means comprising pulleys (PM, PE, PD, PG, PA, PC...) associated with the said motor and the said devices (E, D, G, A, C) of the vehicle, respectively, and belt means passing over the said pulleys, these devices comprising devices forming a hierarchical group with an assigned order of priority where at least one of the devices, referred to as higher ranking, occupies a higher rank than at least one other of the devices, referred to as lower ranking, the equipment comprising, in addition, at least one economizer element (S, S', S"), the state of which varies in keeping with the working conditions of the higher-ranking device, this economizer element being designed to be activated, by excluding the lower-ranking device, at least partially, in response to a variation in the state of the said economizer, which corresponds to a predetermined threshold being exceeded by the working conditions of the higher-ranking device, characterized in that the transmission means of the devices of the said hierarchical group comprise at least one common belt (41, 43, 62, 138, 141) for driving of the said devices of the hierarchical group by the said motor in such a manner that at least the said common belt is subjected to working conditions which, at the most, correspond to a value less than the sum of the maximum consumption outputs of the said devices.

2. Equipment according to Claim 1, characterized in that the said common belt (41, 62, 138, 141) passes over all the pulleys of the said devices (E, D, G, A, C) of the hierarchical group.

3. Equipment according to either of Claims 1 and 2, characterized in that the said common belt (43) forms part of a variator with a variable transmission ratio dependent on the motor speed.

4. Equipment according to Claim 3, characterized in that the said variator comprises a driving pulley (PM') associated with the motor a pulley (PE') associated with one of the devices (E) of the vehicle, at least one of these pulleys having flanges (44, 45) the distance between which can be varied, the common belt passing over these pulleys, other pulleys (PD, PA...) associated with other devices of the hierarchical group and belt means (60, 61, 62, 132, 133, 134, 135, 136, 137) with a fixed transmission ratio passing over at least one pulley integral with the said receiving pulley, and over the said other pulleys.

5. Equipment according to Claim 4, characterized in that the said belt means with a fixed transmission ratio have, for all the devices with form part of the said hierarchical group, a belt common to all these devices (Figures 2, 15, 17, 19).

6. Equipment according to any one of Claims 1 to 5, characterized in that the said higher-ranking device is a booster pump (D).

7. Equipment according to Claim 6, characterized in that the said booster pump is a pump for power-assisted steering (D).

8. Equipment according to Claim 6 or Claim 7, characterized in that the said economizer member (S) has a pressure controller (37) connected to the delivery line (33) of the booster pump (D).

9. Equipment according to Claim 7, characterized in that the said economizer element has interruption means (37') able to detect the lock position of a rack (25) of the power-assisted steering (Figure 6).

10. Equipment according to Claim 7, characterized in that the said economizer element has interruption means able to detect (73) the torque produced on a torsion bar (32) of the power-assisted steering (Figure 7).

11. Equipment according to any one of Claims 1 to 5, characterized in that the said higher-ranking device is a positive-displacement compressor (G) for supercharging the motor with air.

12. Equipment according to Claim 11, characterized in that the said economizer element (S') is activated in accordance with the depressed position of an accelerator pedal (100) of the motor.

13. Equipment according to any one of Claims 1 to 5, characterized in that the said higher-ranking device is an alternator (A).

14. Equipment according to Claim 13, characterized in that the said economizer element (S") is activated in accordance with the voltage of a battery (B) associated with the alternator (A).

15. Equipment according to any one of Claims 1 to 12, characterized in that the said lower-ranking equipment is an alternator (A).

16. Equipment according to Claim 15, in which the alternator (A) has a regulator (R), characterized in that the said economizer element (S) is designed, when activated, to cut off the electrical supply to the regulator (R) of the alternator (A).

17. Equipment according to Claim 15 or Claim 16, characterized in that the alternator (A) is designed to be excluded by the economizer element (S) only if the intensity output by the alternator (A) is greater than a predetermined value (Figure 11).

18. Equipment according to any one of Claims 13 to 17, comprising in air-conditioning evaporator fan (92), characterized in that this fan (92) is designed to be brought into play or excluded at the same time as the alternator (A) is itself brought into play or excluded.

19. Equipment according to any one of Claims 1 to 10, characterized in that the said lower-ranking device is a positive-displacement compressor (G) for supercharging the motor with air.

20. Equipment according to Claim 19, characterized in that the said economizer element (S') is designed to exclude the said positive-displacement compressor (G) for supercharging the motor with air, by closing a passage (89) for the air supplied by the said compressor to the motor (Figure 9).

21. Equipment according to Claim 19, characterized in that the economizer element (S') is designed to exclude the said positive-displacement compressor (G) for supercharging the motor with air, by disengaging the rotational movement transmitted by the motor to the said compressor (G).

22. Equipment according to any one of Claims 1 to 12, characterized in that the said lower-ranking device is a compressor (C) for conditioning the air of the vehicle.

23. Equipment according to Claim 22, characterized in that the said economizer element (S″) is designed to exclude the said compressor (C) for conditioning the air of the vehicle, by disengaging (95) the rotational movement transmitted by the motor to the said compressor (Figure 10).

24. Equipment according to Claim 22 or Claim 23, comprising an air-conditioning condenser fan (97), characterized in that this fan (97) is designed to be brought into play or excluded at the same time as the said compressor (C) for conditioning the air of the vehicle is itself brought into play or excluded.

25. Equipment according to any one of Claims 1 to 24, characterized in that the devices which form the said hierarchical group comprise three devices where the first of these devices (D, G), known as a primary device, occupies a higher rank than a second of these devices, known as a secondary device (G, A), which occupies a higher rank than a third of these devices, known as a tertiary device (A, C).

26. Equipment according to any one of Claims 1 to 24, characterized in that the devices which form the said hierarchical group comprise four devices, where a first of these devices (D), known as a primary device, occupies a higher rank than a second of these devices (G), known as a secondary device, which occupies a higher rank than a third of these devices (A), known as a tertiary device, which, in turn, occupies a higher rank than a fourth of these devices (C), known as a quaternary device.

27. Equipment according to any one of Claims 24 to 26, characterized in that the primary device is a booster pump (D).

28. Equipment according to Claim 24 or Claim 25, characterized in that the primary device is a positive-displacement compressor (G) for supercharging the motor with air.

29. Equipment according to any one of Claims 25 to 28, characterized in that the secondary device is an alternator (A).

30. Equipment according to any one of Claims 25 to 27, characterized in that the secondary device is a positive displacement compressor (G) for supercharging the motor with air.

31. Equipment according to any one of Claims 25 to 27, characterized in that the secondary device is a compressor (C) for conditioning the air of the vehicle.

32. Equipment according to any one of Claims 25 to 27 and 30, characterized in that the tertiary device is an alternator (A).

33. Equipment according to any one of Claims 25 to 30, characterized in that the tertiary device is a compressor (C) for conditioning the air of the vehicle.

34. Equipment according to any one of Claims 26 to 30 and 32, characterized in that the quaternary device is a compressor (C) for conditioning the air of the vehicle.

**Patentansprüche**

1. Durch den Antriebsmotor eines Kraftfahrzeugs angetriebene Ausrüstungseinrichtung, mit mindestens zwei von dem Antriebsmotor des Kraftfahrzeugs über Kraftübertragungsmittel angetriebenen Ausrüstungsaggregaten (D, G, A, C, E), wobei die Kraftübertragungsmittel jeweils dem Motor bzw. den Ausrüstungsaggregaten (E, D, G, A, C) zugeordnete Riemenscheiben (PM, PE, PD, PG, PA, PC...) aufweisen, die mit über sie geführte Riemen zusammenwirken, wobei die Ausrüstungsaggregate gruppenweise und nach zugewiesener Prioritätenrangfolge hierarchisch angeordnet sind, und zumindest eines der Ausrüstungsaggregate, als « höherwertig » bezeichnet, einen höheren Rang als zumindest ein weiteres Aggregat, als « geringerwertig » bezeichnet, einnimmt und mit mindestens einem Sparregler-Element (S, S′, S″), dessen Betriebszustand abhängig von den Betriebszuständen des höhenwertigen Ausrüstungsaggregats variiert, wobei das Sparregler-Element so ausgelegt ist, daß es als Antwort auf eine Änderung seines Zustands, welche Änderung einem Überschreiten eines vorbestimmten Schwellenwerts durch die Betriebszustände des höherwertigen Ausrüstungsaggregats entspricht, aktiv wird und zumindest teilweise das geringerwertige Ausrüstungsaggregat außer Betrieb setzt, dadurch gekennzeichnet, daß die Kraftübertragungsmittel der hierarchisch geordneten Gruppe zumindest einen gemeinsamen Riemen (41, 43, 62, 138, 141) zum Antrieb der Aggregate der hierarchischen Gruppe aufweisen, derart, daß zumindest der gemeinsame Riemen Betriebsbedingungen unterworfen ist, die höchstens einem Wert entsprechen, der kleiner ist als die maximale Summe der Leistungsverbräuche der Ausrüstungsaggregate.

2. Einrichtung nach Anspruch 1, dadurch gekennzeichnet, daß der gemeinsame Riemen (41, 62, 138, 141) über die Gesamtheit der Riemenscheiben der Ausrüstungsaggregate (E, D, G, A, C) der hierarchisch geordneten Gruppe führt.

3. Einrichtung nach Anspruch 1 oder 2, dadurch gekennzeichnet, daß der gemeinsame Riemen (43) einem Regelgetriebe angehört, dessen Übersetzungsverhältnis in Abhängigkeit der Drehzahl des Motors variabel ist.

4. Einrichtung nach Anspruch 3, dadurch gekennzeichnet, daß das Regelgetriebe eine dem Motor zugeordnete Antriebsriemenscheibe (PM′) und eine einem der Ausrüstungsaggregate (E) des Kraftfahrzeugs zugeordnete Riemenscheibe (PE′) aufweist, wobei zumindest eine der Riemenscheiben im Abstand variablen Kegelscheiben (44, 45) aufweist und der gemeinsame Riemen über diese Riemenscheiben läuft, und wobei anderen Ausrüstungsaggregaten der hierarchisch geordneten Gruppe zugeordnete Riemenscheiben (PD, PA...) vorgesehen sind und daß Riemenmittel (60, 61, 62, 132, 133, 134, 135, 136, 137) mit festem Übersetzungsverhältnis über zumindest eine Riemenscheibe führt, die mit der genanten Abtriebsriemenscheibe sowie über die weiteren Riemenscheiben läuft.

5. Einrichtung nach Anspruch 4, dadurch gekennzeichnet, daß die Riemenmittel mit festem Übersetzungsverhältnis für alle Ausrüstungsaggregate, die der hierarchisch geordneten Gruppe angehören, einen allen diesen Ausrüstungsaggregaten gemeinsamen Riemen aufweisen (Fig. 2, 15, 17, 19).

6. Einrichtung nach mindestens einem der Ansprüche 1 bis 5, dadurch gekennzeichnet, daß das « höherwertige » Ausrüstungsaggregat eine Hilfskraftpumpe (D) ist.

7. Einrichtung nach Anspruch 6, dadurch gekennzeichnet, daß die Hilfskraftpumpe eine Lenkhilfe-Pumpe (D) ist.

8. Einrichtung nach Anspruch 6 oder 7, dadurch gekennzeichnet, daß das Sparregler-Element (S) einen Druckregler (37) aufweist, der an die Förderleitung (33) der Hilfskraftpumpe (D) angeschlossen ist.

9. Einrichtung nach Anspruch 7, dadurch gekennzeichnet, daß das Sparregler-Element (S) Unterbrechungsmittel (37') aufweist, die auf die Auslenkposition einer Zahnstange (25) der Lenkhilfe ansprechen (Fig. 6).

10. Einrichtung nach Anspruch 7, dadurch gekennzeichnet, daß das Sparregler-Element Unterbrechungsmittel (73) aufweist, die auf ein auf einen Torsionsstab (32) der Lenkhilfe aufgebrachtes Moment ansprechen (Fig. 7).

11. Einrichtung nach mindestens einem der Ansprüche 1 bis 5, dadurch gekennzeichnet, daß das « höherwertige » Ausrüstungsaggregat ein Ladeverdichter (G) zur Aufladung des Motors ist.

12. Einrichtung nach Anspruch 11, dadurch gekennzeichnet, daß das Sparregler-Element (S') in Abhängigkeit der niedergedrückten Stellung eines Gaspedals (100) des Motors aktiviert wird.

13. Einrichtung nach mindestens einem der Ansprüche 1 bis 5, dadurch gekennzeichnet, daß das « höherwertige » Hilfsaggregat eine Lichtmaschine (A) ist.

14. Einrichtung nach Anspruch 13, dadurch gekennzeichnet, daß das Sparregler-Element (S") in Abhängigkeit der Spannung einer mit der Lichtmaschine (A) verbundenen Batterie (B) aktiviert wird.

15. Einrichtung nach mindestens einem der Ansprüche 1 bis 12, dadurch gekennzeichnet, daß das « geringerwertige » Ausrüstungsaggregat eine Lichtmaschine (A) ist.

16. Einrichtung nach Anspruch 15, wobei die Lichtmaschine (A) einen Regler (R) aufweist, dadurch gekennzeichnet, daß das Sparregler-Element (S) angepaßt ist, die elektrische Leitung des Reglers (R) der Lichtmaschine (A) zu unterbrechen, wenn er aktiviert ist.

17. Einrichtung nach Anspruch 15 oder 16, dadurch gekennzeichnet, daß die Lichtmaschine (A) angepaßt ist, von dem Sparregler-Element (S) lediglich dann außer Betrieb gesetzt zu werden, wenn der von der Lichtmaschine (A) abgegebene Strom einen vorbestimmten Wert übersteigt (Fig. 11).

18. Einrichtung nach mindestens einem der Ansprüche 13 bis 17 mit einem Verdampferventilator (92) für einen Airconditioner, dadurch gekennzeichnet, daß der Ventilator (92) angepaßt ist, dann außer Betrieb oder in Betrieb gesetzt zu werden, wenn gleichzeitig die Lichtmaschine (A) ihrerseits in Betrieb oder außer Betrieb gesetzt ist.

19. Einrichtung nach mindestens einem der Ansprüche 1 bis 10, dadurch gekennzeichnet, daß das « geringerwertige » Ausrüstungsaggregat ein Ladeverdichter (G) zur Aufladung des Motors ist.

20. Einrichtung nach Anspruch 19, dadurch gekennzeichnet, daß das Sparregler-Element (S') angepaßt ist, den Ladeverdichter (G) zur Aufladung des Motors durch Schließung einer Luftleitung (89) für die von dem Ladeverdichter an den Motor abgegebene Luft außer Betrieb zu setzen (Fig. 9).

21. Einrichtung nach Anspruch 19, dadurch gekennzeichnet, daß das Sparregler-Element (S') angepaßt ist, den Ladeverdichter (G) zur Aufladung des Motors durch Auskuppeln der Drehbewegung, die von dem Motor auf den Ladeverdichter (G) übertragen wird, außer Betrieb zu setzen.

22. Einrichtung nach mindestens einem der Ansprüche 1 bis 12, dadurch gekennzeichnet, daß das « geringerwertige » Ausrüstungsaggregat ein Kompressor (C) für den Airconditioner des Kraftfahrzeugs ist.

23. Einrichtung nach Anspruch 22, dadurch gekennzeichnet, daß das Sparregler-Element (S") angepaßt ist, den Kompressor (C) für den Airconditioner des Kraftfahrzeugs durch Auskuppeln (95) der von dem Motor auf den Kompressor übertragenen Drehbewegung außer Betrieb zu setzen (Fig. 10).

24. Einrichtung nach Anspruch 22 oder 23, mit einem Kondensatorventilator (97) für den Airconditioner, dadurch gekennzeichnet, daß der Ventilator (97) angepaßt ist, zur gleichen Zeit in Betrieb oder außer Betrieb gesetzt zu werden, wenn der Kompressor (C) des Airconditioners des Fahrzeugs seinerseits in Betrieb oder außer Betrieb gesetzt wird.

25. Einrichtung nach mindestens einem der Ansprüche 1 bis 24, dadurch gekennzeichnet, daß die Ausrüstungsaggregate, welche die hierarchisch geordnete Gruppe bilden, drei Ausrüstungsaggregate aufweisen, wobei ein erstes dieser Ausrüstungsaggregate (D, G) als erstes Ausrüstungsaggregat bezeichnet, einen höheren Rang einnimmt als ein zweites dieser Ausrüstungsaggregate, als zweites Ausrüstungsaggregat (G, A) bezeichnet, welches einen höheren Rang einnimmt als das dritte dieser Ausrüstungsaggregate, als drittes Ausrüstungsaggregat (A, C) bezeichnet.

26. Einrichtung nach mindestens einem der Ansprüche 1 bis 24, dadurch gekennzeichnet, daß die Ausrüstungsaggregate, welche die hierarchisch geordnete Gruppe bilden, vier Ausrüstungsaggregate aufweisen, von denen ein erstes dieser Ausrüstungsaggregate (D) als erstes Ausrüstungsaggregat bezeichnet, einen höheren Rang einnimmt als ein zweites dieser Ausrüstungsaggregate, als zweites Ausrüstungsaggregat (G) bezeichnet, welches einen höheren Rang einnimmt als das dritte Ausrüstungsaggregat, als drittes Ausrüstungsaggregat (A) bezeichnet, welches seinerseits einen höheren Rang einnimmt als ein viertes dieser Ausrüstungsaggregate (C), als viertes Ausrüstungsaggregat, bezeichnet.

27. Einrichtung nach mindestens einem der Ansprüche 24 bis 26, dadurch gekennzeichnet, daß das erste Ausrüstungsaggregat eine Hilfskraftpumpe (D) ist.

28. Einrichtung nach Anspruch 24 oder 25, dadurch gekennzeichnet, daß das erste Ausrüstungsaggregat ein Ladekompressor zur Aufladung des Motors ist.

29. Einrichtung nach mindestens einem der Ansprüche 25 bis 28, dadurch gekennzeichnet, daß das zweite Ausrüstungsaggregat eine Lichtmaschine (A) ist.

30. Einrichtung nach mindestens einem der Ansprüche 25 bis 27, dadurch gekennzeichnet, daß das zweite Ausrüstungsaggregat ein Ladekompressor (G) zur Aufladung des Motors ist.

31. Einrichtung nach mindestens einem der Ansprüche 25 bis 27, dadurch gekennzeichnet, daß das zweite Ausrüstungsaggregat ein Kompressor für den Airconditioner des Kraftfahrzeugs ist.

32. Einrichtung nach mindestens einem der Ansprüche 25 bis 27 und 30, dadurch gekennzeichnet, daß das dritte Ausrüstungsaggregat eine Lichtmaschine (A) ist.

33. Einrichtung nach mindestens einem der Ansprüche 25 bis 30, dadurch gekennzeichnet, daß das dritte Ausrüstungsaggregat ein Kompressor für den Airconditioner des Kraftfahrzeugs ist.

34. Einrichtung nach mindestens einem der Ansprüche 26 bis 30 und 32, dadurch gekennzeichnet, daß das vierte Ausrüstungsaggregat ein Kompressor für den Airconditioner des Kraftfahrzeugs ist.

FIG.1

FIG.2

FIG.4

FIG.3

## FIG.5

## FIG.6

FIG.7

# FIG.8

# FIG.9

# FIG.10

FIG.11

FIG.12

FIG.13

8

## FIG.14

## FIG.15